**Europäisches Patentamt**

**European Patent Office**

**Office européen des brevets**

(11) Veröffentlichungsnummer: **0 047 532**
**A1**

(12) # EUROPÄISCHE PATENTANMELDUNG

(21) Anmeldenummer: **81107105.9**

(51) Int. Cl.³: **B 60 T 11/10**

(22) Anmeldetag: **09.09.81**

(30) Priorität: **01.04.81 DE 3113163**
**09.09.80 DE 3033875**

(43) Veröffentlichungstag der Anmeldung: **17.03.82**
**Patentblatt 82/11**

(84) Benannte Vertragsstaaten: **AT BE CH DE FR GB IT LI NL SE**

(71) Anmelder: **Gassner, Johann, jr., Haus Nr. 10,
D-8011 Göggenhofen (DE)**

(72) Erfinder: **Gassner, Johann, jr., Haus Nr. 10,
D-8011 Göggenhofen (DE)**

(74) Vertreter: **Lamprecht, Helmut, Dipl.-Ing.,
Corneliusstrasse 42, D-8000 München 5 (DE)**

(54) **Hydraulische Anhängerbremse, insbesondere für land- und forstwirtschaftliche Anhänger.**

(57) Eine hydraulische Anhängerbremse, insbesondere für schleppergezogene land- und forstwirtschaftliche Anhänger, mit einem am Anhänger angeordneten Bremszylinder (16) zur Betätigung der Stellnocken (108) von Backenbremsen (102), wobei der Kolbenhub des Bremszylinders (16) einer Bewegung der Stellnocken (108) über den doppelten Stellwinkel zwischen Löse- und Bremsstellung entspricht und die Stellnocken (108) bei beiden Endstellungen des Kolbens (40), in deren eine der Kolben ständig durch eine Feder (80) gedrückt wird, jeweils ihre Bremsstellung einnehmen, und mit einer Druckquelle am Zugfahrzeug, welche über eine mit einer lösbaren Kupplung (12) versehene Bremsleitung (10) mit dem Bremszylinder (16) verbunden ist.

Ein in die Bremsleitung (10) einbezogenes Ventil (61) verbindet die Bremsleitung (10) mit einer Rücklaufleitung (26) zur Druckquelle, wobei das Ventil (61) in eine Stellung vorgespannt ist, in welcher es den Lösedruck in der Bremsleitung (10) aufrechterhält. Das Ventil (61) ist mit seinem Stellorgan (67) derart mit der mechanischen Verbindung (73) zwischen Zugfahrzeug und Anhänger verbunden, dass die Vorspannung (69) des Ventils (61) einer Annäherung zwischen Zugfahrzeug und Anhänger entgegengerichtet ist, so dass die Anhängerbremse als Auflaufbremse wirksam wird.

Johann Gassner jun.

8011 Göggenhofen 10

-------------------------------------------------

## Hydraulische Anhängerbremse, insbesondere für land- und forstwirtschaftliche Anhänger

-------------------------------------------------

Die Erfindung betrifft eine hydraulische Anhängerbremse, insbesondere für schleppergezogene land- und forstwirtschaftliche Anhänger, mit einem einer Druckquelle nachschaltbaren, durch ein Stellorgan betätigbaren Ventil, mit einem am Anhänger angeordneten Bremszylinder zur Betätigung der Stellnocken von Backenbremsen und mit einer das Ventil mit dem Bremszylinder verbindenden, mit einer lösbaren Kupplung versehenen Bremsleitung, wobei der Kolben des Bremszylinders in Richtung auf seine eine Endstellung ständig durch eine Feder belastet und in der Gegenrichtung aus der Bremsleitung beaufschlagbar ist.

- 2 -

- 2 -

Die Ausrüstung von in der Land- und Forstwirtschaft benutzten Anhängern, welche häufig auch am öffentlichen Straßenverkehr teilnehmen, mit der Betriebssicherheit dienenden Einrichtungen und der tatsächliche Zustand dieser Einrichtungen, insbesondere auch der Bremseinrichtungen, entspricht in der Regel nicht mehr den heutigen Sicherheitsanforderungen, insbesondere unter Berücksichtigung der Tatsache, daß mit derartigen Anhängern immer größere Lasten transportiert werden. Vor allem den Bremsen kommt in diesem Zusammenhang eine besondere Bedeutung zu.

Für das Abbremsen von Anhängern bis zu 8 t wird es nach den derzeit in der Bundesrepublik Deutschland geltenden Bestimmungen für ausreichend angesehen, den Anhänger mit einer Auflaufbremse zu versehen. Die Auflaufbremse bietet u.a. den Vorteil, daß bei längeren Gefällestrecken ein ermüdendes, andauerndes Betätigen des Bremspedals am Zugfahrzeug unterbleiben kann. Diese Bremsen haben aber den Nachteil, daß die Rückwärtsfahrt nur möglich ist, wenn die Bremseinrichtung durch eine Rückfahrsperre blockiert wird. Außerdem findet bei großer Last häufig ein ruckartiges Bremsen statt. Die einzelnen Räder lassen sich nur verhältnismäßig schwer auf ein gleichmäßiges Bremsen einstellen. Muß bei einer Bergfahrt angehalten werden, tritt die Auflaufbremse überhaupt nicht in Funktion.

Da die Rückfahrsperre nur betätigt werden kann, wenn

- 3 -

- 3 -

der Schlepperfahrer sein Fahrzeug verläßt, wird dies nicht selten als lästig angesehen und die Rückfahrsperre wird in unzulässiger Weise auf Dauer blockiert, so daß auch bei Vorwärtsfahrt keine Bremswirkung mehr stattfinden kann. Außerdem läßt die Wartung der mechanischen Einrichtungen sehr zu wünschen übrig, so daß die Funktionsfähigkeit der Bremsen auch dadurch beeinträchtigt wird.

Aus Gründen der Verkehrssicherheit ist es deshalb wünschenswert, Anhänger für land- und forstwirtschaftlichen Betrieb mit einer zuverlässigen, möglichst wartungsfreien Bremseinrichtung zu versehen, die sowohl bei Vorwärts- als auch bei Rückwärtsfahrt betätigbar ist und die auch bei abgekuppeltem Fahrzeug eine zuverlässige Bremsung ermöglicht.

Es sind bereits Druckluftbremsen für derartige Anhänger vorgeschlagen worden, wobei zur Steuerung der Druckluft die mechanische oder hydraulische Bremsanlage des Ackerschleppers eingesetzt wird. Druckluftbremsen erfordern aber eine verhältnismäßig sorgfältige Wartung und Pflege, wenn ihre Funktionssicherheit aufrechterhalten werden soll. Gerade im rauhen land- und forstwirtschaftlichen Betrieb

- 4 -

kann mit einer derart sorgfältigen Pflege und Wartung jedoch nicht gerechnet werden, so daß zu befürchten ist, daß durch Ausrüstung von Anhängern mit Druckluftbremsanlagen die Betriebssicherheit keineswegs wesentlich erhöht wird. Als weiterer Nachteil einer Druckluftbremsanlage kommt hinzu, daß nicht alle vorhandenen Ackerschlepper problemlos mit einer zusätzlichen Drucklufterzeugungsanlage versehen werden können.

Es besteht demnach das Bedürfnis nach einer betriebssicheren, möglichst einfach zu wartenden Betriebsbremse für land- und forstwirtschaftliche Anhänger, mit der Anhänger und die als Zugfahrzeug dienenden Schlepper auch nachträglich mit vergleichsweise geringem Aufwand ausgerüstet werden können.

Da auf den modernen Ackerschleppern eine Hydraulikanlage vorhanden ist, die Drucköl zur Verfügung stellt, ist bereits der Weg beschritten worden, eine hydraulische Bremse für Anhänger vorzusehen. Zu diesem Zweck wird auf dem Schlepper ein durch das Bremspedal zu betätigendes Bremsventil angeordnet, bei dessen Betätigung über eine mit einer Kupplungsverbindung versehene Bremsleitung ein einfachwirkender Bremszylinder am Anhänger mit Drucköl beaufschlagt und in die Bremsstellung bewegt wird. Damit auch bei ausgeschaltetem Schleppermotor und dabei stillstehender Hydraulikpumpe die Bremse betätigt werden
kann, besitzen die bekannten Hydraulikbremsen dieser
Art am Schlepper einen Druckspeicher, in welchem bei
laufender Hydraulikpumpe ein vorgegebener Speicherdruck erzeugt wird. Wird mit diesem Speicherdruck gebremst, so fällt der Speicherdruck ab und der Behälter muß durch die Hydraulikpumpe wieder aufgefüllt
werden.

Es ist auch bereits vorgeschlagen worden, am Anhänger
einen weiteren Druckspeicher vorzusehen, der über ein
im Normalfall geschlossenes Ventil mit dem Bremszylinder verbunden ist. Trennen sich Anhänger und
Schlepper unbeabsichtigt, so reißt eine elektrische
Kabelverbindung oder eine Reißleine, die den Schlepper
mit dem Anhänger verbindet, worauf das elektrisch
bzw. mechanisch betätigbare Ventil geöffnet und der
Bremszylinder mit Drucköl aus dem am Anhänger befindlichen Druckspeicher beaufschlagt wird.

Die bekannten Konstruktionen haben jedoch den Nachteil, daß die Bremswirkung eine Beaufschlagung mit
Drucköl erfordert, so daß eine Bremsung dann nicht
stattfindet, wenn kein Drucköl zur Verfügung steht.

Zwar wird durch die von der Hydraulikanlage gespeisten Druckspeicher ein ausreichender Bremsdruck auch dann zur Verfügung gestellt, wenn der Schleppermotor stillgesetzt ist, dieser Druck baut sich jedoch mit jedem Bremsvorgang ab und steht nur begrenzt zur Verfügung. Es kann also ohne Verbindung mit der Hydraulikanlage des Schleppers nicht beliebig oft gebremst werden.

Gegenüber diesen bekannten Konstruktionen besteht das Bedürfnis nach einer Hydraulikbremse, welche große Betriebssicherheit mit einem minimalen Anspruch an Wartung und Pflege vereinigt und welche sich außerdem zum nachträglichen Einbau in bereits vorhandenen Fahrzeugen auf einfache und kostengünstige Weise eignet. Schließlich soll aber auch gewährleistet sein, daß jederzeit unabhängig vom Hydrauliksystem des Schleppers eine zuverlässige Abbremsung des Anhängers möglich ist, und zwar auch bei beliebig häufiger Wiederholung des Bremsvorgangs.

Zur Lösung dieser Aufgabe wurde von dem Erfinder die eingangs erwähnte hydraulische Anhängerbremse geschaffen, bei welcher die Feder den Kolben in seine Bremsstellung zieht, während die Beaufschlagung des Kolbens aus der Bremsleitung den Kolben in seine Lösestellung bewegt. Es wird also bei dieser Konstruktion die Bremswirkung durch die ständig vorhandene Kraft der Feder erzielt, die immer dann wirksam wird, wenn der Druck in der Bremsleitung unter die von der Feder ausgeübte Kraft absinkt. Dies geschieht nicht nur durch absichtliche Öffnung des Bremsventils als Folge einer Betätigung des Bremspedals am Zugfahrzeug, sondern auch dann, wenn die Druckquelle ausfällt, beispielsweise durch Stillsetzen des Motors des Zugfahrzeugs oder aber durch Bruch oder Abreißen der Bremsleitung.

Weil die von der Feder ausgeübte Kraft ständig zur Verfügung steht, weil das Lösen der Bremse nur dadurch möglich ist, daß der Druck in der Bremsleitung erhöht wird, wodurch die Feder stets erneut bis zum Erreichen ihrer Betriebskraft gespannt wird, können beliebig viele Bremsvorgänge durchgeführt werden, ohne daß die in der Feder zur Verfügung stehende Bremskraft erschöpft wird.

Diese Konstruktion überwindet Nachteile der mechanischen Auflaufbremse, nämlich das ruckartige Bremsen bei großer Last, das ungleichmäßige Bremsen der einzelnen Räder und die Gefahr, daß die Rückfahrsperre aus Gründen der Bequemlichkeit blockiert wird und dann gegebenenfalls in kritischen Situationen die Auflaufbremse überhaupt nicht zur Verfügung steht. Außerdem ist die Bremse zuverlässig und weitgehend wartungsfrei und ermöglicht auch bei abgekuppeltem Anhänger eine zuverlässige Bremsung. Die Bremse ist aufgrund ihrer Eigenschaften insbesondere auch für den rauhen landwirtschaftlichen Betrieb geeignet, sie erfordert aber während der Fahrt zur Aufrechterhaltung einer gewünschten Bremswirkung eine andauernde Betätigung des Bremsventils, was insbesondere bei Talfahrten sehr ermüdend sein kann. Bei Auflaufbremsen wird dagegen bei Talfahrten die Anhängerbremse durch das gegen das Zugfahrzeug drückende Gewicht des Anhängers betätigt.

Der vorliegenden Erfindung liegt die Aufgabe zugrunde, die eingangs erwähnte hydraulische Anhängerbremse so weiterzubilden, daß die vorstehend beschriebenen Vorteile dieser hydraulischen Anhängerbremse voll erhalten bleiben, daß andererseits aber auch die Vorteile der Auflaufbremse nutzbar sind, so daß insbesondere auch bei längeren Gefällestrecken ein ermüdendes, andauerndes Betätigen des Bremspedals am Zugfahrzeug entfallen kann.

Die Lösung der gestellten Aufgabe besteht darin, daß die Bremsleitung über das Ventil mit einer Rücklaufleitung zur Druckquelle verbunden ist, daß das Ventil in eine Lösestellung zur Aufrechterhaltung eines Lösedrucks in der Bremsleitung vorgespannt ist, und daß das Stellorgan des Ventils derart mit der eine begrenzte Beweglichkeit in Zugrichtung aufweisenden mechanischen Kupplungsverbindung zwischen Zugfahrzeug und Anhänger verbunden ist, daß bei gestreckter Kupplungsverbindung das Stellorgan von der Kupplungsverbindung zur Einnahme seiner Lösestellung freigegeben, durch eine Annäherung zwischen Zugfahrzeug und Anhänger dagegen in Richtung auf seine Bremsstellung bewegbar ist.

Durch diese Konstruktion wird im Gefälle oder bei plötzlicher Verzögerung des Zugfahrzeugs der schiebende Anhänger das Stellorgan des Ventils aus seiner Lösestellung bewegen und das Ventil in eine Stellung überführen, in welcher eine Druckveränderung in der Bremsleitung eintritt, die zu einer Bewegung des Kolbens im Bremszylinder und damit zu einer Bremsung führt. Da bei dieser Konstruktion die hydraulische Bremse ständig zur Verfügung steht, bietet sich der zusätzliche Vorteil, daß unter Einhaltung der z.B. in der Bundesrepublik Deutschland geltenden Vorschriften die Wirkungsweise der Auflaufbremse auch bei Anhängern über 8 t einsetzbar wird.

Die Bremswirkung würde jedoch dann nicht zur Verfügung stehen, wenn die zur Erzeugung der Bremskraft dienende Feder bricht. Damit zumindest bei angeschlossenem Hydrauliksystem auch bei einem Bruch der Feder eine Bremsung möglich ist, besteht eine besonders vorteilhafte Ausgestaltung darin, daß der Kolbenhub des Bremszylinders einer Bewegung der Stellnocken über den doppelten Stellwinkel zwischen Löse- und Bremsstellung entspricht, und daß die Stellnocken bei beiden Endstellungen des Kolbens jeweils ihre Bremsstellung einnehmen.

0047532

Der durch die Feder in seine eine Endstellung gezogene Kolben überführt auf mechanischem Wege die Stellnocken in ihre Bremsstellung, in welcher sie beispielsweise die Bremsbacken einer Innenbackenbremse entgegen der Wirkung einer Rückstellfeder gegen die Bremstrommel drücken. Falls durch die Bremsleitung ein entsprechender Druck in den Bremszylinder gelangt, wird der Kolben entgegen der Kraft der Feder bewegt und die Stellnocken werden über einen gewissen Stellwinkel in ihre Lösestellung verschwenkt, in welcher die Rückstellfeder die Bremsbacken aus ihrer bremsenden Stellung zurückzieht. Bricht die Feder, so entfällt die dem Bremsdruck in der Bremsleitung entgegenwirkende Kraft, so daß der Kolben aus seiner mittleren, dem Gleichgewicht zwischen dem Hydraulikdruck und der Federkraft entsprechenden Stellung weiter in Richtung auf seine andere Endstellung bewegt wird, in welcher die Stellnocken wieder ihre Bremsstellung einnehmen, nun allerdings um den doppelten Stellwinkel gegenüber der durch die Feder bewirkten Endstellung verschwenkt. Der Führer des Zugfahrzeugs wird durch diese unbeabsichtigte Bremsung auf den Bruch der Feder aufmerksam gemacht, so daß eine baldige Reparatur des Schadens veranlaßt werden kann. Außerdem besteht die Möglichkeit, durch Betätigen des Bremsventils und den dadurch bewirkten Druckabfall in der Bremsleitung die blockierte Bremse wieder zu lösen.

Eine besonders zweckmäßige weitere Ausgestaltung besteht darin, daß das Bremsventil als Drosselventil ausgebildet ist, dessen Drosselquerschnitt gegenüber einem fest eingestellten Basiswert bei Betätigung des Ventils verringerbar ist.

Durch diese Konstruktion wird im normalen Betriebszustand in der Bremsleitung ein Druck aufgebaut, welcher der Feder in der Lösestellung der Bremse das Gleichgewicht hält. Wird durch Betätigung des Bremsventils der Drosselquerschnitt verringert, erhöht sich der Druck in der Bremsleitung, die Feder wird weiter gespannt und der Kolben in Richtung auf jene Endstellung bewegt, welche entgegengesetzt zu jener Endstellung liegt, in welche der Kolben unter dem Einfluß der Feder gezogen wird. Im normalen Betrieb wird bei dieser Konstruktion die Bremskraft durch den Hydraulikdruck in der Bremsleitung erzeugt, während beim Ausfall der Hydraulikanlage bzw. bei abgekuppeltem Anhänger die entgegen dem Hydraulikdruck wirkende Feder die Bremse in Bremsstellung überführt.

0047532

Vorteilhafte Ausgestaltungen der Erfindung ergeben sich aus den Unteransprüchen.

Anhand der nun folgenden Beschreibung der in der Zeichnung dargestellten Ausführungsbeispiele der Erfindung wird diese näher erläutert.

Es zeigt:

Fig. 1    in schematischer Darstellung eine Anhängerbremse mit den am Zugfahrzeug und am Anhänger anzuordnenden Teilen in ungebremster Stellung, und

Fig. 2    eine der Fig. 1 entsprechende Darstellung einer Ausführungsform mit geändertem Bremsventil.

In der Zeichnung bezeichnet 10 eine Bremsleitung, die sich aus zwei Teilstücken 10a und 10b zusammensetzt, die mittels einer Kupplung 12 verbindbar sind. Das Teilstück 10a ist mit einem Steuergehäuse 14 verbunden, das am Zugfahrzeug angeordnet ist, und trägt ein Kupplungsstück 12a.

Das Teilstück 10b der Bremsleitung 10 ist mit einem an einem Anhänger angeordneten Bremszylinder 16 verbunden und trägt ein Kupplungsteilstück 12b.

Der Bremszylinder 16 ist als einfachwirkender Zylinder ausgebildet und enthält einen Kolben 40, der an einer Seite mit einer Kolbenstange 42 verbunden ist, die aus dem Bremszylinder 16 herausgeführt ist.

Der Bremszylinder 16 wird von einer Zugfeder 80 konzentrisch umschlossen.

Das Steuergehäuse 14 besitzt drei Anschlüsse 18, 20 und 22. Der Anschluß 18 steht mit der hydraulischen Druckquelle des Zugfahrzeugs, z.B. dem Hydrauliksystem eines Schleppers, in Verbindung. Der Anschluß 18 ist über einen Kanal 24 direkt mit dem Anschluß 20 verbunden, an welchen das Bremsleitungsteilstück 10a angeschlossen ist. Der Anschluß 22 ist mit einer Rücklaufleitung 26 verbunden, die die Hydraulikflüssigkeit wieder der nicht gezeigten Druckquelle zuführt. Im Inneren des Steuergehäuses 14 steht der Anschluß 22 über einen Kanal 28 und ein Druckregelventil 30 einerseits, sowie über einen Kanal 32 und ein Bremsventil 34 andererseits mit dem Kanal 24 und damit mit den Anschlüssen 18 und 20 in Verbindung.

Das Druckregelventil 30 und damit praktisch auch das Bremsventil 34 werden durch eine Drosselöffnung 38 überbrückt, die den Kanal 24 unmittelbar mit den Kanälen 28 und 32 und damit mit der Rücklaufleitung 26 verbindet. Der Querschnitt dieser Drosselöffnung 38 ist derart bemessen, daß der Druckverlust praktisch vernachlässigbar ist, solange die Druckquelle die Bremsleitung 10 mit Druck beaufschlagt, daß aber dann, wenn eine Druckergänzung über den Anschluß 18 nicht stattfindet, beispielsweise bei abgeschaltetem Motor des Zugfahrzeugs, der Druckverlust über die Drosselöffnung 38 den Druck in der Bremsleitung 10 soweit absenkt, daß in der nachfolgend noch näher erläuterten Weise eine Bremsung des Anhängers stattfindet.

- 14 -

Statt der in der Zeichnung dargestellten Drosselöffnung 38 ist es beispielseweise auch möglich, im
Ventilsitz des Bremsventils 34 eine Kerbe anzuordnen,
die bei geschlossenem Bremsventil 34 als Drosselöffnung wirkt.

An einem Ventilsitz 63 des Bremsventils 34 liegt in
geschlossener Ventilstellung ein Ventilkörper 65 an,
der mit einem Schaft 67 verbunden ist, der aus dem
Gehäuse nach außen ragt und dort von einer Druckfeder 69 umgeben wird, deren Spannung durch ein auf
dem Schaft 67 axial verstellbares Einstellorgan 71
den jeweiligen Bedürfnissen angepaßt werden kann.

Die Feder 69 übt eine derartige Vorspannung aus, daß
der Ventilkörper 65 gegen den Ventilsitz 63 gezogen
wird und damit die Verbindung zwischen der Bremsleitung 10 und der Rücklaufleitung 26 unterbrochen wird.

Eine zur Verbindung des Zugfahrzeugs mit dem Anhänger
dienende Kupplung 73 ist mit einem Zugglied 75 in geeigneter Weise derart mit dem Zugfahrzeug verbunden,
daß die Last des Anhängers auf das Zugfahrzeug übertragen werden kann, daß aber andererseits eine gewisse Beweglichkeit der Anhängerkupplung 73 in Richtung auf das Zugfahrzeug möglich ist. Die Kupplung
73 ist mit einem Mitnehmer 77 verbunden, welcher in
eine Ausnehmung 79 am freien Ende des Schaftes 67 derart eingreift, daß bei einer Bewegung der Kupplung 73 in Richtung auf das Zugfahrzeug die durch die Feder 69 ausgeübte Vorspannung überwunden und der Ventilkörper 65 vom Ventilsitz 63 abgehoben wird, so daß der im Kanal 24 und der Bremsleitung 10 vorhandene, durch das Druckregelventil 30 beispielsweise auf 35 bar eingestellte Druck wahlweise mehr oder weniger abgesenkt werden kann, wodurch es der Feder 80 ermöglicht wird, die Kolbenstange 42 zurückzuziehen und einen nachfolgend noch näher erläuterten Stellnocken 108 der Anhängerbremse in seine Bremsstellung zu überführen.

Die Feder 69 weist eine progressive Charakteristik auf, d.h. mit zunehmendem Federweg wächst die zur Bewegung in Richtung auf die Vollbremsstellung erforderliche Last.

Die Zugfeder 80 greift einerseits an einem auf dem Bremszylinder 16 befestigten Gewindestück 82 und andererseits an einem auf der Kolbenstange 42 verstellbar angebrachten Gewindestück 84 an. Die Kolbenstange 42 ist an einem Widerlager 86 eines Lagerbocks 88 angelenkt, der sich vom Widerlager 86 bis etwa zum entgegengesetzten Ende des Bremszylinders 16 erstreckt, wo der Lagerbock 88 mit seitlichen Flanschen 90 versehen ist, die zu beiden Seiten des Lagerbocks 88 mit Bohrungen versehen sind, durch welche die mit Gewindeenden versehenen Schenkel eines U-förmigen Befestigungsbügels 92 gesteckt werden können, der dazu geeignet ist, den Lagerbock mit Hilfe von Muttern 94 auf einer Fahrzeugachse 96 festzuspannen. An der Fahrzeugachse ist in bekannter Weise eine zur Fahrzeugachse 96 parallel verlaufende Bremswelle 98 gelagert, welche drehfest mit einem Bremshebel 100 verbunden ist, an dessen freies Ende der Bremszylinder 16 angeschlossen ist.

Es ergibt sich somit eine leicht nachträglich anbringbare Montageeinheit. Es ist lediglich in geeigneter Weise am Fahrzeug der Bremsleitungsabschnitt 10b zu verlegen und die nachfolgend noch erläuterte Handpumpe 64 mit dem Vorratsbehälter 62, vorzugsweise im Bereich der Fahrzeugdeichsel, anzubringen.

Von der Bremswelle 98 aus wird z.B. eine Innenbackenbremse 102 an jedem der Räder der starren Anhängerachse betätigt. Die Innenbackenbremse 102 weist in einer Bremstrommel 104 zwei spreizbare Bremsbacken 105a und 105b auf, welche entgegen der Wirkung einer Rückholfeder 106 durch einen Stellnocken 108 in die Bremsstellung gespreizt werden können.

Dabei kann der Stellnocken wegen seiner symmetrischen
Form aus seiner gezeigten Stellung nach beiden Seiten
verschwenkt werden, um jeweils bei gleichem Stellwinkel
die gleiche Bremswirkung zu erzielen.

Ist das Bremsventil 34 geschlossen, so baut sich in
der Bremsleitung 10 der durch das Druckregelventil
30 bestimmte Druck von beispielsweise 35 bar auf.

Dieser Druck wird im Bremszylinder 16 wirksam und
überwindet außerdem einen Teil der Kraft der Zugfeder
80, so daß sich ein Gleichgewicht einstellt, bei dem der
Kolben eine Mittelstellung einnimmt, in der sich der
Stellnocken 108 in seiner Lösestellung befindet.

Sobald der Druck in der Bremsleitung 10 unter den diesen
Gleichgewichtszustand bewirkenden Druck absinkt, zieht
die Feder 80 die Kolbenstange 42 zurück und der Stellnocken 108 gelangt in seine Bremsstellung.

Der für die Bremswirkung erforderliche Druckabfall
in der Bremsleitung 10 kann im Regelfall durch mehr
oder weniger weite Öffnung des Bremsventils 34 herbeigeführt werden, aber auch durch Bruch der Bremsleitung
10. Bei geöffnetem Bremsventil 34 steht die Bremsleitung 10 über einen ausreichend großen Querschnitt mit der Rücklaufleitung 26 in Verbindung, so daß ein wirksamer Druckabfall in der Bremsleitung 10 eintritt.

Wird das Bremsventil 34 wieder geschlossen, baut sich sofort wieder der durch das Druckregelventil 30 eingestellte Lösedruck in der Bremsleitung 10 auf.

Wird der Motor des Zugfahrzeugs abgestellt und damit die Druckquelle für das Hydrauliksystem außer Betrieb gesetzt, so bleibt zunächst der Lösedruck in der Bremsleitung 10 erhalten, es sei denn, es wird das Bremsventil 34 geöffnet,um bewußt eine Abbremsung des Anhängers herbeizuführen. Mit Hilfe der Drosselöffnung 38 tritt jedoch auch eine Bremsung des Anhängers ein, wenn die Druckquelle außer Betrieb gesetzt wird und das Bremsventil nicht betätigt wird. Es baut sich dann über die Drosselöffnung 38 der Druck in der Bremsleitung ab, so daß die Bremskraft der Feder 80 wirksam werden kann.

Sobald der Motor des Zugfahrzeugs in Betrieb gesetzt und damit die Druckquelle wieder wirksam wird, baut sich der Lösedruck in der Bremsleitung 10 wieder auf und die Bremsen des Anhängers werden gelöst.

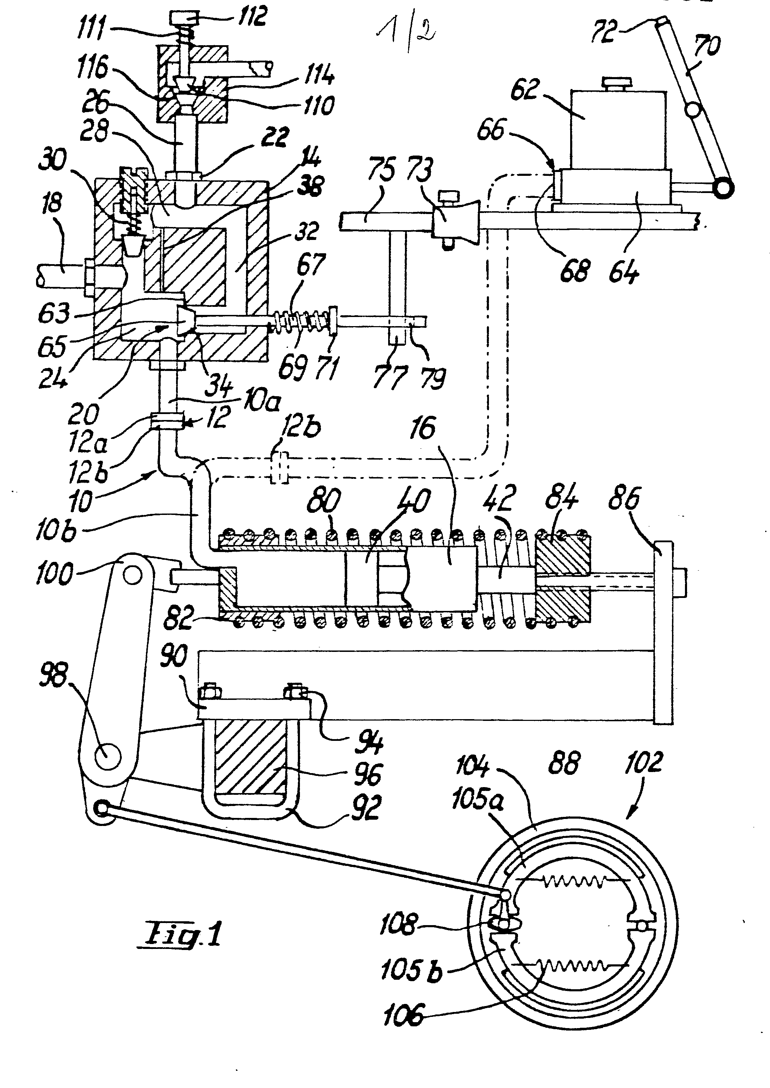

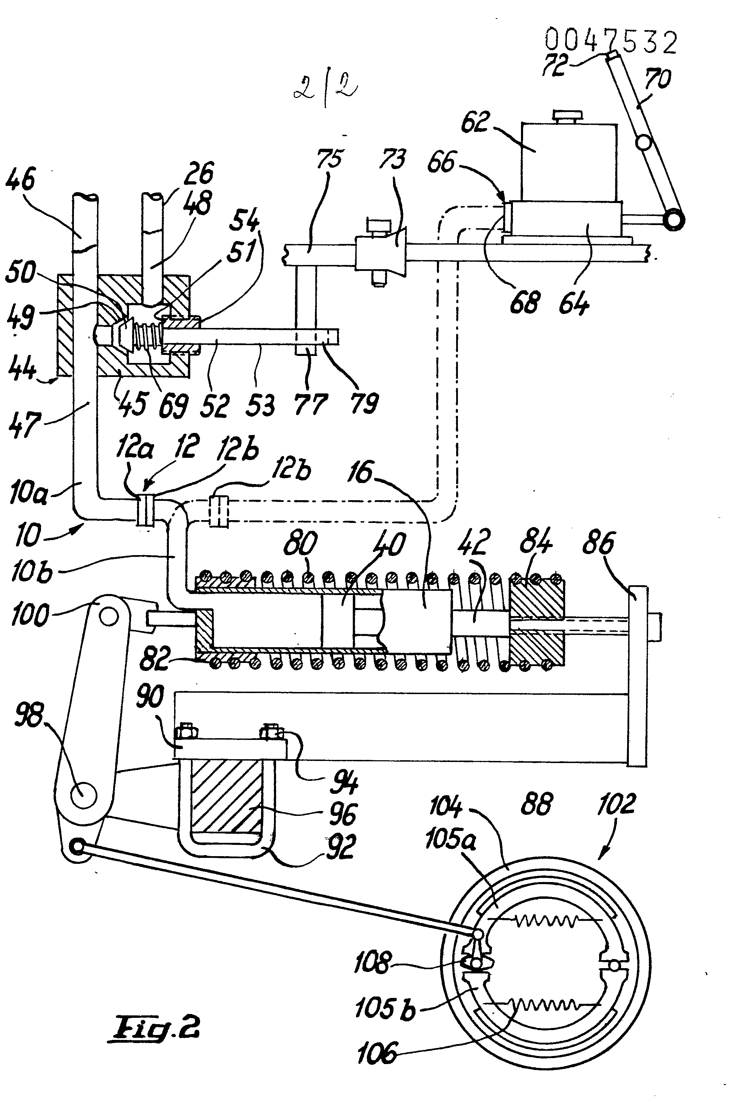

Um bei abgekuppeltem und gebremsten Anhänger den Anhänger manövrierfähig zu machen, ist es erforderlich, die Bremse zu lösen und dabei die Kraft der Feder 80 zu überwinden. Zu diesem Zweck ist am Anhänger eine mit einem kleinen Vorratsbehälter 62 für Hydraulikflüssigkeit verbundene Handpumpe 64 angeordnet, deren druckseitiger Anschluß 66 mit einem dem Kupplungsteilstück 12a entsprechenden Kupplungsteilstück 68 versehen ist, so daß das Teilstück 10b der Bremsleitung 10 nach dem Lösen vom schlepperseitigen Teilstück 10a mit der Handpumpe 64 verbunden werden kann, wie dies in unterbrochenen Linien in den Fig. 1 und 2 dargestellt ist. Es kann nun durch Betätigung der Handpumpe 64 im Bremsleitungsteilstück 10b der zum Lösen der Bremse erforderliche Druck aufgebaut werden. Am Betätigungshebel 70 der Handpumpe 64 ist ein Löseknopf 72 angeordnet, bei dessen Betätigung der druckseitige Anschluß 66 der Handpumpe 64 unmittelbar mit dem Vorratsbehälter 62 verbunden wird, so daß sich der Druck im Bremsleitungsteilstück 10b rasch abgebaut und die Bremse wieder in Bremsstellung bewegt werden kann.

Um z.B. beim Rückwärtsfahren die Wirkung der Auflaufbremse aufzuheben, ist in die Rücklaufleitung 26 ein Ventil einbezogen, welches aus einem Ventilkörper 110 besteht, der entgegen der Wirkung einer Feder 111 durch einen Betätigungsknopf 112 gegen einen in einem Gehäuse 114 ausgebildeten Ventilsitz 116 gedrückt werden kann, so daß eine Druckabsenkung in der Bremsleitung 10 unmöglich ist, so lange der Knopf 112 niedergedrückt wird. Sobald der Knopf 112 freigegeben wird, ist die Bremse wieder voll funktionsfähig.

Die symmetrische Form des Stellnockens 108 hat zur Folge, daß auch bei einem Bruch der zur Erzeugung der Bremskraft dienenden Feder 80 eine Bremswirkung eintritt. Bricht die Feder 80, solange die Bremsleitung 10 über die jeweiligen Bremsventile die Verbindung zur Druckquelle am Zugfahrzeug herstellt, so entfällt die das Gleichgewicht der Kräfte in der Lösestellung der Bremse bewirkende Kraft der Feder 80, so daß der Druck in der Bremsleitung 10 den Kolben 40 in diejenige Endstellung überführen wird, welche der durch die Zugfeder 80 bewirkten Endstellung entgegengesetzt liegt. Dadurch werden die Stellnocken 108 in ihre Bremsstellung verschwenkt und der Anhänger wird abgebremst, ohne daß hierzu das Bremsventil 34 betätigt worden ist. Es ist somit sichergestellt, daß bei einem Bruch der Feder 80 der Anhänger abbremsbar bleibt. Die sich dann automatisch einstellende Bremsung weist auf den Defekt hin, so daß er so rasch wie möglich behoben werden kann.

0047532

Die in Fig. 2 gezeigte Konstruktion unterscheidet sich von der vorstehend beschriebenen Ausführungsform im wesentlichen dadurch, daß das Steuergehäuse 14 mit dem Druckregelventil 30 und dem Bremsventil 34 sowie der Drosselöffnung 38 durch ein als Bremsventil dienendes Drosselventil 44 ersetzt ist. Dieses Drosselventil 44 besteht aus einem Gehäuse 45 mit einem Anschluß 46 zur Verbindung mit der Druckquelle, einem Anschluß 47 zur Verbindung mit der Bremsleitung 10 und einem Anschluß 48 zur Verbindung mit der Rücklaufleitung 26. Im Gehäuse 45 ist ein Ventilsitz 49 für einen Ventilkörper 50 ausgebildet, der sich am Ende eines unter Bildung einer Schulter 51 abgestuften Ventilschafts 52 befindet. Der vom Ventilkörper 50 abgewandte Abschnitt 53 des Schaftes 52 ist durch eine Führungsbüchse 54 geführt, welche mit dem Gehäuse 45 in Gewindeeingriff steht und somit in Bezug auf den Ventilschaft 52 in axialer Richtung verstellbar ist. Zwischen dem Ventilkörper 50 und der Führungsbüchse 54 umgibt den Ventilschaft 52 eine Druckfeder 69, welche die Schulter 51 von der Führungsbüchse 54 abhebt und den Ventilkörper 50 so weit gegen den Ventilsitz 49 drückt, bis sich ein Gleichgewicht zwischen der Feder 69 und dem Druck in der Leitung 10 einstellt. Durch die axiale Verstellung der Führungshülse 54 kann die Federspannung und damit der Drosselquerschnitt des Drosselventils 44 für dessen Ruhestellung eingestellt werden.

Wenn kein Druck auf die Anhängerkupplung 73 ausgeübt und von dieser auf den Ventilschaft 52 übertragen wird, befindet sich der Ventilkörper 50 in
seiner Ruhestellung und das Drosselventil reduziert
den in der Bremsleitung 10 herrschenden
Druck gegenüber dem an der Anschlußstelle 46
herrschenden Druck der Druckquelle. Der reduzierte
Druck wird mittels der Führungshülse 54 derart eingestellt, daß er der Feder 80 bei jener Stellung des
Kolbens 40 das Gleichgewicht hält, in welcher die
Stellnocken 108 in der Lösestellung liegen. Wird nun
der Schaft 52    betätigt und der Ventilkörper 50
gegen den Ventilsitz 49 verschoben, so verringert sich
der Drosselquerschnitt und der Druck in der Bremsleitung 10 steigt an, so daß der Kolben 40 entgegen
der Wirkung der Feder 80 verschoben wird, so daß die
Stellnocken 108 sich in ihre Bremsstellung bewegen.

Wird der Schaft 52    wieder freigegeben, vergrößert
sich der Drosselquerschnitt wieder und der Druck in
der Bremsleitung 10 sinkt wieder soweit ab, daß die
Bremsen gelöst werden.

Wird der Motor des Zugfahrzeugs stillgesetzt, oder
die Bremsleitung 10 unterbrochen, wird die Zugfeder 80
nicht durch den Bremszylinder 16 gespannt, so daß
unter der Wirkung der Zugfeder 80 die Stellnocken 108
in die Bremsstellung überführen. Die Drehbewegung erfolgt dabei in einem Drehsinn, welcher der Bewegung
der Stellnocken 108 entgegengesetzt ist, die diese
aus der Lösestellung durchführen, wenn das Bremspedal
36 betätigt wird.

Patentansprüche

1. Hydraulische Anhängerbremse, insbesondere für schleppergezogene land- und forstwirtschaftliche Anhänger, mit einem einer Druckquelle nachschaltbaren, durch ein Stellorgan betätigbaren Ventil, mit einem am Anhänger angeordneten Bremszylinder zur Betätigung der Stellnocken von Backenbremsen und mit einer das Ventil mit dem Bremszylinder verbindenden, mit einer lösbaren Kupplung versehenen Bremsleitung, wobei der Kolben des Bremszylinders in Richtung auf seine eine Endstellung ständig durch eine Feder belastet und in der Gegenrichtung aus der Bremsleitung beaufschlagbar ist, dadurch gekennzeichnet, daß die Bremsleitung (10) über das Ventil (44; 64) mit einer Rücklaufleitung (26) zur Druckquelle verbunden ist, daß das Ventil (44; 64) in eine Lösestellung zur Aufrechterhaltung eines Lösedrucks in der Bremsleitung (10) vorgespannt ist, und daß das Stellorgan (53; 67) des Ventils (44; 64) derart mit der eine begrenzte Beweglichkeit in Zugrichtung aufweisenden mechanischen Kupplungsverbindung (73) zwischen Zugfahrzeug und Anhänger verbunden ist, daß bei gestreckter Kupplungsverbindung das Stellorgan (53; 67) von der Kupplungsverbindung (73) zur Einnahme seiner Lösestellung freigegeben, durch eine Annäherung zwischen Zugfahrzeug und Anhänger dagegen in Richtung auf seine Bremsstellung bewegbar ist.

2. Anhängerbremse nach Anspruch 1, dadurch gekennzeichnet, daß das Ventil (44; 64) am Zugfahrzeug angeordnet ist.

3. Anhängerbremse nach Anspruch 2, dadurch gekennzeichnet, daß die am Zugfahrzeug angeordnete Anhängerkupplung (73) eine begrenzte Beweglichkeit in Zugrichtung aufweist und über ein Betätigungsglied (77) mit dem Stellorgan (53, 67) des Ventils (44; 64) verbunden ist.

4. Anhängerbremse nach einem der vorhergehenden Ansprüche, dadurch gekennzeichnet, daß das Ventil (64) in Bremsstellung geöffnet ist und sein Stellorgan (67) entgegen seiner einer Annäherung von Zugfahrzeug und Anhänger entsprechenden Bewegungsrichtung in seine Schließstellung vorgespannt ist.

5. Anhängerbremse nach einem der Ansprüche 1 bis 3, dadurch gekennzeichnet, daß das Ventil (44) in seiner Bremsstellung geschlossen ist und sein Stellorgan (53) in seiner einer Annäherung von Zugfahrzeug und Anhänger entsprechenden Bewegungsrichtung in seine Schließstellung derart vorgespannt ist, daß am Ventil (44) in einer Drosselstellung Gleichgewicht zwischen dem Lösedruck in der Bremsleitung (10) und der Vorspannung (69) besteht.

6. Anhängerbremse nach einem der vorhergehenden Ansprüche, dadurch gekennzeichnet, daß die am Stellorgan (53;67) wirksame Vorspannung einstellbar ist.

7. Anhängerbremse nach einem der Ansprüche 1 bis 4, dadurch gekennzeichnet; daß die Rücklaufleitung (26) ein Hilfsventil (110) enthält, welches in seine geöffnete Stellung vorgespannt und durch ein Stellglied (112) für die Dauer der Betätigung des Stellgliedes (112) entgegen der Wirkung seiner Vorspannung (114) in seine geschlossene Stellung überführbar ist.

8. Anhängerbremse nach einem der Ansprüche 1 bis 4 oder 7, dadurch gekennzeichnet, daß die Vorspannung (69) des Ventils (64) eine progressive Charakteristik aufweist.

9. Anhängerbremse nach einem der vorhergehenden Ansprüche, dadurch gekennzeichnet, daß der Kolbenhub des Bremszylinders (16) einer Bewegung der Stellnocken (108) über den doppelten Stellwinkel zwischen Löse- und Bremsstellung entspricht, und daß die Stellnocken bei beiden Endstellungen des Kolbens (40) jeweils ihre Bremsstellung einnehmen.

Fig.1

2/2

0047532

Fig.2

0047532
Nummer der Anmeldung

# Europäisches Patentamt
# EUROPÄISCHER RECHERCHENBERICHT

EP 81 10 7105

| EINSCHLÄGIGE DOKUMENTE | | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | B 60 T 11/10 |
| EP | EP - A - 0 026 306 (GASSNER) | | 1,2 | |
| A | DE - A - 2 202 676 (LINDE) | | | |
| A | DE - A - 1 630 920 (PETTIT) | | | |
| A | FR - A - 2 259 732 (BOSCH) | | | |
| A | DE - B - 1 019 915 (SCHULTZ) | | | |
| | -- -- -- -- | | | |

RECHERCHIERTE SACHGEBIETE (Int. Cl.³)

B 60 T 11/00
13/00
7/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-12-1981 | BLURTON |

EPA form 1503.1  06.78